Europäisches Patentamt

European Patent Office

Office européen des brevets

(11) Numéro de publication: **0 521 757 B1**

(12) **FASCICULE DE BREVET EUROPEEN**

(45) Date de publication de fascicule du brevet: **30.11.94** (51) Int. Cl.5: **G01C 19/28**

(21) Numéro de dépôt: **92401824.5**

(22) Date de dépôt: **26.06.92**

(54) **Système gyroscopique à mesure de l'orientation de la toupe.**

(30) Priorité: **05.07.91 FR 9108467**

(43) Date de publication de la demande:
**07.01.93 Bulletin 93/01**

(45) Mention de la délivrance du brevet:
**30.11.94 Bulletin 94/48**

(84) Etats contractants désignés:
**BE CH DE ES GB IT LI NL SE**

(56) Documents cités:
**FR-A- 2 506 007**
**GB-A- 1 399 607**
**US-A- 4 361 760**
**US-A- 4 899 955**

(73) Titulaire: **AEROSPATIALE SOCIETE NATIONA-LE INDUSTRIELLE Société Anonyme dite:**
**37, Boulevard de Montmorency**
**F-75016 Paris (FR)**

(72) Inventeur: **Kononow, Mierzislaw**
**6 Avenue Georges Clémenceau**
**F-92330 Sceaux (FR)**
Inventeur: **Wallez, Pierre**
**7 rue du Jour**
**F-91430 Vauhallan (FR)**

(74) Mandataire: **Bonnetat, Christian**
**CABINET BONNETAT**
**23, Rue de St.Pétersbourg**
**F-75008 Paris (FR)**

Rank Xerox (UK) Business Services
(3.10/3.09/3.3.3)

## Description

La présente invention concerne un système gyroscopique grâce auquel on peut mesurer, avec une bonne résolution, l'inclinaison du plan défini par les axes de rotation des cadres primaire et secondaire par rapport aux axes de rotation desdits cadres.

Le système conforme à l'invention est avantageux en ce qu'il n'induit ni frottement, ni couple parasite. De plus, il ne nécessite pas la mise en place de contacts tournants.

Dans la demande de brevet français n° 90 13806, déposée le 7 novembre 1990, au nom de la demanderesse, on a décrit un système gyroscopique comprenant :

- une toupie ayant un centre et susceptible d'être entraînée en rotation autour d'un premier axe passant par ledit centre de la toupie ;
- un cadre primaire sur lequel ladite toupie est montée de façon à pouvoir tourner autour dudit premier axe ;
- un cadre secondaire sur lequel ledit cadre primaire est monté de façon à pouvoir tourner autour d'un deuxième axe, passant par ledit centre de la toupie et perpendiculaire audit premier axe ;
- un boîtier, à l'intérieur duquel sont logés ladite toupie et lesdits cadres primaire et secondaire et sur lequel ledit cadre secondaire est monté de façon à pouvoir tourner autour d'un troisième axe, passant par ledit centre de la toupie et perpendiculaire audit deuxième axe, ladite toupie étant telle que, au moins au voisinage du plan défini par lesdits deuxième et troisième axes, sa surface extérieure présente la forme d'une sphère centrée sur ledit centre et porte un ensemble de zones alternativement contrastées, tandis que ledit cadre secondaire est monté rotatif par l'intermédiaire de moyeux, qui définissent ledit troisième axe et dont au moins l'un d'eux est creux ;
- des moyens d'éclairement, solidaires dudit boîtier et émettant un faisceau lumineux centré sur ledit troisième axe, pour former, à travers ledit moyeu creux, une tache lumineuse sur ladite surface extérieure sphérique de la toupie ;
- des moyens photosensibles, solidaires dudit boîtier, prévus pour observer, à travers ledit moyeu creux, ladite tache lumineuse formée par lesdits moyens d'éclairement ; et
- des moyens de calcul pour calculer, à partir des informations fournies par lesdits moyens photosensibles, l'angle de rotation dudit boîtier autour dudit deuxième axe.

Voir aussi document FR-A- 2 506 007.

La présente invention a pour objet un système gyroscopique de ce type, perfectionné pour pouvoir délivrer de plus l'angle de rotation dudit boîtier autour dudit troisième axe.

A cette fin, selon l'invention, le système gyroscopique comprenant :

- une toupie ayant un centre et susceptible d'être entraînée en rotation autour d'un premier axe passant par ledit centre ;
- un cadre primaire sur lequel ladite toupie est montée de façon à pouvoir tourner autour dudit premier axe ;
- un cadre secondaire sur lequel ledit cadre primaire est monté de façon à pouvoir tourner autour d'un deuxième axe, passant par ledit centre de la toupie et perpendiculaire audit premier axe ;
- un boîtier, à l'intérieur duquel sont logés ladite toupie et lesdits cadres primaire et secondaire et sur lequel ledit cadre secondaire est monté de façon à pouvoir tourner autour d'un troisième axe, passant par ledit centre de la toupie et perpendiculaire audit deuxième axe, ladite toupie étant telle que, au moins au voisinage du plan défini par lesdits deuxième et troisième axes, sa surface extérieure présente la forme d'une sphère centrée sur ledit centre et porte un ensemble de zones alternativement contrastées, tandis que ledit cadre secondaire est monté rotatif sur ledit boîtier par l'intermédiaire de moyeux, qui définissent ledit troisième axe et dont au moins l'un est creux ;
- des premiers moyens d'éclairement, solidaires dudit boîtier et émettant un premier faisceau lumineux centré sur ledit troisième axe pour former, à travers ledit moyeu creux, une première tache lumineuse sur ladite surface extérieure sphérique de la toupie ;
- des premiers moyens photosensibles, solidaires dudit boîtier, prévus pour observer, à travers ledit moyeu creux, ladite première tache lumineuse formée par lesdits premiers moyens d'éclairement ; et
- des premiers moyens de calcul pour calculer, à partir des informations fournies par lesdits premiers moyens photosensibles, l'angle de rotation $\beta$ dudit boîtier, autour dudit deuxième axe ;

est remarquable en ce qu'il comporte :

- des deuxièmes moyens d'éclairement, solidaires dudit boîtier et émettant un deuxième faisceau lumineux centré sur un quatrième axe passant par ledit centre et coplanaire auxdits deuxième et troisième axes pour former une deuxième tache lumineuse sur ladite surface extérieure sphérique de la toupie, ledit quatrième axe formant un angle fixe $\epsilon$ avec ledit deuxième axe ;

- des deuxièmes moyens photosensibles, solidaires dudit boîtier, prévus pour observer ladite deuxième tache lumineuse formée par lesdits deuxièmes moyens d'éclairement ; et

- des deuxièmes moyens de calcul pour calculer, à partir dudit angle fixe $\epsilon$ et des mesures $\beta$ et A respectivement fournies par lesdits premiers et deuxièmes moyens photosensibles, la quantité $A/\cos\beta.\cos\epsilon$, représentative de l'angle de rotation $\alpha$ dudit boîtier autour dudit troisième axe.

Le système gyroscopique est conforme aux revendications

De préférence, l'éclairement de ladite surface extérieure sphérique de la toupie par lesdits deuxièmes moyens d'éclairement, ainsi que l'observation de ladite deuxième tache lumineuse par lesdits deuxièmes moyens photosensibles s'effectuent à travers ledit moyeu creux.

Il est alors avantageux que lesdits premiers et deuxièmes moyens d'éclairement et que lesdits premiers et deuxièmes moyens photosensibles soient regroupés dans un unique détecteur logé au moins en partie dans ledit moyeu creux. Ce détecteur peut comporter :

- un premier élément photoémetteur, disposé à l'extérieur dudit moyeu creux et associé à une première fibre optique passant à travers ledit moyeu creux pour former ladite première tache lumineuse ;

- un premier élément photosensible, disposé à l'extérieur dudit moyeu creux et associé à une deuxième fibre optique observant ladite première tache lumineuse et passant à travers ledit moyeu creux ;

- un deuxième élément photoémetteur, disposé à l'extérieur dudit moyeu creux et associé à une troisième fibre optique passant à travers ledit moyeu creux pour former ladite deuxième tache lumineuse ; et

- un deuxième élément photosensible, disposé à l'extérieur dudit moyeu creux et associé à une quatrième fibre optique observant ladite deuxième tache lumineuse et passant à travers ledit moyeu creux.

De préférence, la distance entre ladite surface sphérique de la toupie et les extrémités, en regard de celle-ci, desdites première et deuxième fibres optiques est égale à la distance entre ladite surface sphérique de la toupie et les extrémités, en regard de celle-ci, desdites troisième et quatrième fibres optiques.

Ledit détecteur peut comporter un corps pourvu d'une partie centrale traversée par lesdites première à quatrième fibres optiques et d'une branche latérale traversée par lesdites troisième et quatrième fibres optiques.

Dans un mode de réalisation avantageux, permettant le contrôle des mesures desdits deuxièmes moyens photosensibles, par exemple lorsque le système gyroscopique est soumis à des vibrations, on prévoit, de plus :

- des troisièmes moyens d'éclairement, solidaires dudit boîtier et émettant un troisième faisceau lumineux centré sur un cinquième axe passant par ledit centre et coplanaire auxdits deuxième et troisième axes pour former une troisième tache lumineuse sur ladite surface extérieure sphérique de la toupie, ledit cinquième axe formant un angle fixe $\delta$ avec ledit deuxième axe ;

- des troisièmes moyens photosensibles, solidaires dudit boîtier, prévus pour observer ladite troisième tache lumineuse formée par lesdits troisièmes moyens d'éclairement ; et

- des troisièmes moyens de calcul pour calculer, à partir dudit angle fixe $\delta$ et des mesures $\beta$ et B, respectivement fournies par lesdits premiers et troisièmes moyens photosensibles, la quantité $B/\cos\beta.\cos\delta$, représentative de l'angle de rotation $\alpha$ dudit boîtier autour dudit troisième axe.

De préférence, ledit cinquième axe est symétrique dudit quatrième axe par rapport audit troisième axe, de sorte que, en valeur absolue, les angles fixes $\epsilon$ et $\delta$ sont égaux.

De façon analogue à ce qui a été mentionné ci-dessus, l'éclairement de ladite surface extérieure sphérique de la toupie par lesdits troisièmes moyens d'éclairement, ainsi que l'observation de ladite troisième tache lumineuse par lesdits troisièmes moyens photosensibles, s'effectuent, de préférence, à travers ledit moyeu creux.

Il est alors avantageux que lesdits troisièmes moyens d'éclairement et que lesdits troisièmes moyens photosensibles soient regroupés dans ledit détecteur unique.

Le détecteur unique comporte donc, de plus :

- un troisième élément photoémetteur, disposé à l'extérieur dudit moyeu creux et associé à une cinquième fibre optique passant à travers ledit moyeu creux pour former ladite troisième tache lumineuse ; et

- un troisième élément photosensible, disposé à l'extérieur dudit moyeu creux et associé à une sixième fibre optique observant ladite troisième tache lumineuse et passant à travers ledit moyeu creux.

Il est également avantageux que les extrémités desdites cinquième et sixième fibres optiques, en regard de la surface sphérique de la toupie, soient à la même distance que les extrémités correspondantes desdites première à quatrième fibres optiques.

Le corps du détecteur comporte alors une autre branche latérale traversée par lesdites cinquième et sixième fibres optiques, qui traversent également ladite partie centrale du détecteur. Cette autre branche latérale peut être symétrique de la première, par rapport à ladite partie centrale.

Selon une application avantageuse, le système gyroscopique conforme à la présente invention est destiné à détecter la position angulaire de l'axe de lacet et de l'axe de tangage d'un aéronef, éventuellement en auto-rotation, par rapport à la verticale. A cet effet, ledit boîtier est fixé sur ledit aéronef de façon que ledit troisième axe de rotation du cadre secondaire par rapport audit boîtier soit confondu avec l'axe de roulis dudit aéronef.

Les figures du dessin annexé feront bien comprendre comment l'invention peut être réalisée. Sur ces figures, des références identiques désignent des éléments semblables.

La figure 1 montre un mode de réalisation du système gyroscopique selon l'invention, suivant un plan de coupe passant par l'axe de rotation de la toupie et par l'axe de rotation du cadre secondaire.

La figure 2 montre le système gyroscopique de la figure 1 suivant un plan de coupe passant par l'axe de rotation du cadre primaire et par l'axe de rotation du cadre secondaire, cette figure 2 correspondant à la ligne II-II de la figure 1.

La figure 3 illustre schématiquement la disposition des capteurs par rapport à la toupie et auxdits cadres primaire et secondaire.

La figure 4 montre un exemple d'ensemble de zones contrastées constituant des moyens de codage de la rotation de la toupie.

La figure 5 est une vue latérale du détecteur unique conforme à la présente invention.

La figure 6 est une vue de face du détecteur de la figure 5.

Les figures 7, 8 et 9 sont respectivement des coupes selon les lignes VII-VII, VIII-VIII et IX-IX de la figure 5.

La figure 10 donne le schéma synoptique d'un mode de réalisation des moyens électroniques exploitant les informations délivrées par les moyens photosensibles.

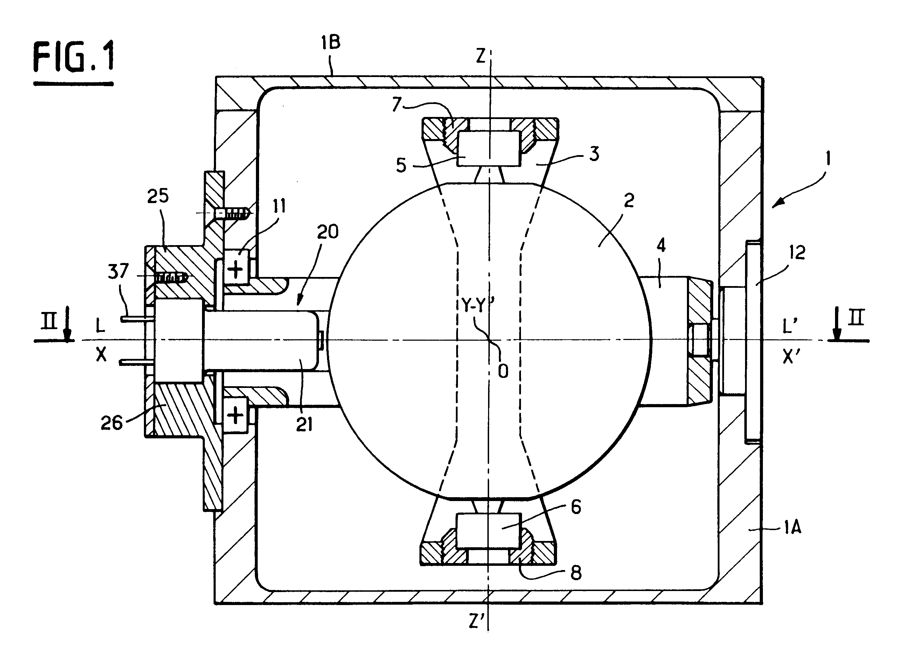

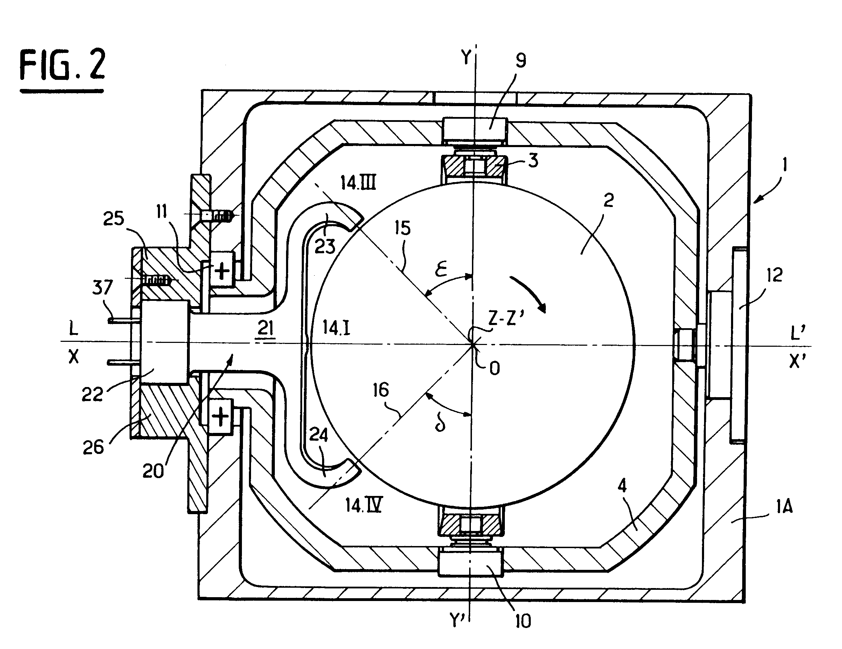

L'exemple de réalisation du système gyroscopique conforme à la présente invention, montré par les figures 1 et 2, comporte un boîtier 1 d'axe longitudinal L-L', à l'intérieur duquel sont montés une toupie sphérique 2, un cadre primaire 3 et un cadre secondaire 4. Le boîtier 1 est constitué par une boîte 1A, obturable à sa partie supérieure par un couvercle 1B.

La toupie 2, dont le centre est désigné par O, est montée rotative sur le cadre primaire 3 autour axe Z-Z' (destiné à fournir une référence de verticale), grâce à des paliers à roulements 5 et 6, diamétralement opposés, fixés sur le cadre primaire 3, par l'intermédiaire d'écrous 7 et 8. La mise en rotation de la toupie 2 autour de l'axe Z-Z' peut être provoquée par tout moyen connu, par exemple un ressort à lame spiralée, comme cela est décrit dans le brevet américain US-A-4 709 586.

Grâce à des premiers moyeux à roulement 9 et 10, solidaires du cadre secondaire 4, le cadre primaire 3 peut pivoter, par rapport au cadre secondaire 4, autour d'un axe Y-Y' rencontrant l'axe Z-Z' au centre O. En outre, l'axe Y-Y' est perpendiculaire à l'axe Z-Z'.

De plus, des seconds moyeux à roulement opposés 11 et 12, solidaires du boîtier 1, définissent, pour le cadre secondaire 4, un axe de rotation X-X' par rapport au boîtier 1. L'axe X-X' passe par le centre O et il est perpendiculaire à chacun des axes Z-Z' et Y-Y'.

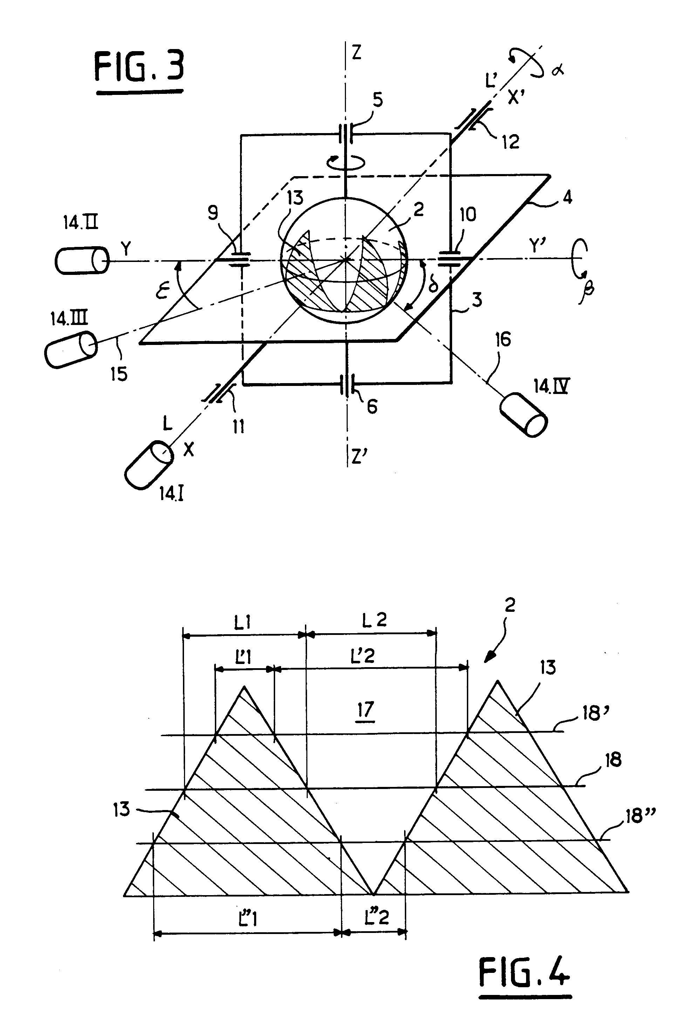

Ainsi, le système gyroscopique montré par les figures 1 et 2 présente la structure illustrée schématiquement en perspective sur la figure 3. L'axe Z-Z' de la toupie 2 sert de référence de verticale et, lorsque l'attitude du boîtier 1 varie, il en résulte les rotations relatives $\alpha$ et $\beta$ autour des axes X-X' et Y-Y', entre ledit boîtier 1 et lesdits cadres primaire 3 et secondaire 4.

Comme on le verra ci-après, la surface sphérique de la toupie 2 porte des marques 13, par exemple des gravures, qui sont susceptibles de coopérer avec un capteur 14, pour déterminer la rotation que le boîtier 1 a effectué autour de la ligne de visée dudit capteur 14. Les marques 13 constituent sur la surface sphérique de la toupie 2 des alternances de zones claires et obscures détectables par ledit capteur 14. Elles peuvent être du type décrit dans la demande de brevet français mentionnée ci-dessus. Elles peuvent également être formées par une succession de triangles équilatéraux, comme montré sur les figures 3 et 4.

On comprendra aisément que, si le capteur 14, solidaire du boîtier 1, occupe la position 14-I, pour laquelle sa ligne de visée est confondue avec l'axe X-X', il mesure, en observant les marques 13 de la toupie 2, la valeur de l'angle de rotation $\beta$ du boîtier 1 autour de l'axe Y-Y'. En revanche, si le capteur 14, solidaire du boîtier 1, occupe la position 14.II, pour laquelle sa ligne de visée est confondue avec l'axe Y-Y', il mesure, en observant les marques 13 de la toupie 2, la quantité $\alpha.\cos\beta$, $\alpha$ étant la valeur de la rotation du boîtier 1 autour de l'axe X-X'. De plus, si le capteur 14, solidaire du boîtier 1, occupe une position 14.III, pour laquelle sa ligne de visée est confondue avec un axe 15 radial pour la sphère 2 et coplanaire auxdits axes X-X' et Y-Y', ledit axe 15 faisant un angle fixe $\epsilon$ avec l'axe Y-Y', on voit que le capteur 14 mesure alors la quantité $A = \alpha.\cos\beta.\cos\epsilon$. De même, si le capteur 14 occupe une position 14.IV, pour laquelle sa ligne de visée est confondue avec un axe 16 radial pour la sphère 2 et coplanaire auxdits axes X-X′ et Y-Y′, ledit axe 16 faisant un angle fixe $\delta$ avec l'axe Y-Y′, on voit que le capteur 14 mesure la quantité B = $\alpha.\cos\beta.\cos\delta$. Si les axes 15 et 16 sont symétriques l'un de l'autre par rapport à l'axe X-X′, les valeurs absolues |A| et |B| des quantités A et B sont égales puisqu'alors la valeur absolue |$\epsilon$| de l'angle $\epsilon$ est égale à la valeur absolue |$\delta$| de l'angle $\delta$.

Sur la figure 4, on a représenté, développée, une partie de la surface sphérique de la toupie 2 portant un exemple de réalisation particulier de zones détectables. Dans cet exemple, les zones obscures 13 sont formées par une suite de triangles équilatéraux adjacents identiques, dont la hauteur est parallèle à l'axe Z-Z′ et qui sont reliés l'un à l'autre par un sommet de leur base, de sorte que, sur la surface de la toupie 2, deux triangles obscurs 13 consécutifs délimitent entre eux une zone claire 17, également en forme de triangle équilatéral.

Lorsque le plan défini par les axes X-X′ et Y-Y′ est perpendiculaire à l'axe Z-Z′, la ligne de visée du capteur 14 forme une trace 18 sur la surface de la toupie 2, en cours de rotation, telle que les longueurs L1 et L2 des zones 13 et 17 traversées par ladite trace 18 sont égales. En revanche, si le plan défini par les axes X-X′ et Y-Y′ bascule, dans un sens, autour de l'un desdits axes, la trace 18 se déplace en 18′, correspondant à des longueurs L1′ et L2′ inégales, L1′ étant inférieure à L2′. Si le basculement dudit plan s'effectue dans l'autre sens, la trace 18 se déplace en 18″, correspondant à des longueurs L1″ et L2″ également inégales, mais maintenant L1″ étant supérieure à L2″.

On voit donc qu'en mesurant L1,L2, L1′,L2′, L1″,L2″, le capteur 14 peut connaître l'amplitude et le sens du basculement du plan défini par les axes X-X′ et Y-Y′.

L'angle de rotation $\beta$ autour de l'axe Y-Y′ est déterminé directement par le capteur 14 en position 14.I, tandis que le capteur 14 en position 14.III mesure la quantité A = $\alpha.\cos\beta.\cos\epsilon$.

Puisque $\beta$ est déterminé à partir de la position 14.I du capteur 14 et que $\epsilon$ est un angle fixe connu, on peut donc calculer $\alpha$ par la formule $\alpha$ = A/$\cos\beta.\cos\epsilon$. Le capteur 14 en position 14.IV fournit également une mesure redondante de $\alpha$ = B/$\cos\beta.\cos\delta$, de sorte que, à partir de ces deux mesures de $\alpha$, on peut déterminer avec plus de précision la valeur réelle de $\alpha$.

Ainsi, avec deux ou trois capteurs 14, disposés respectivement en 14.I, 14.III et/ou 14.IV, il est possible de mesurer des angles de rotation $\alpha$ et $\beta$.

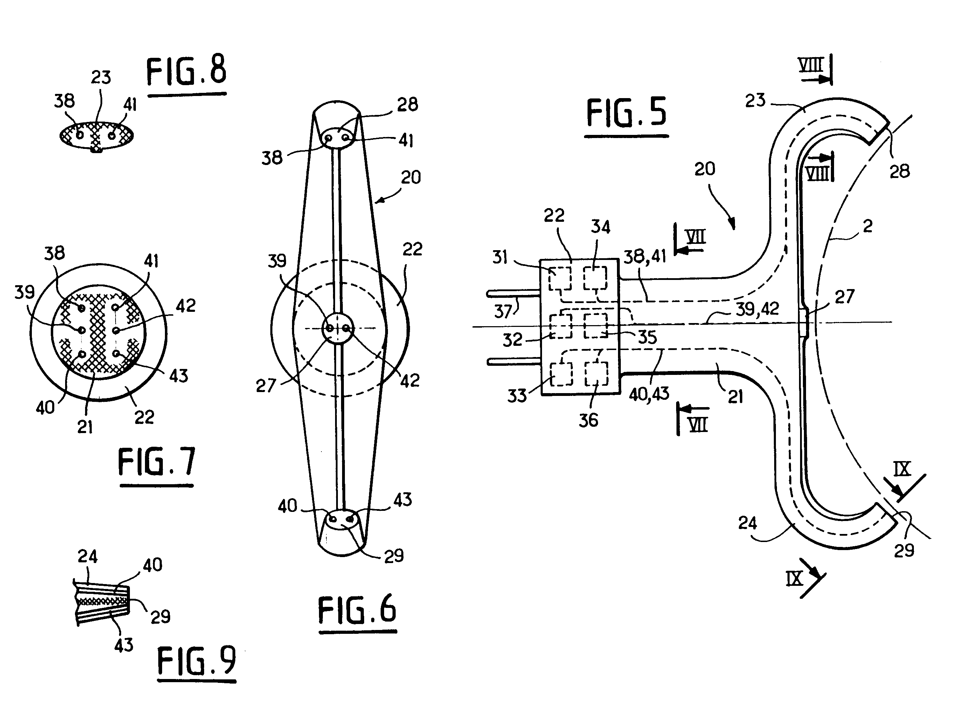

A cet effet, selon l'invention, on prévoit un détecteur multiple 20, tel que représenté sur les figures 1, 2 et 5 à 9.

Le détecteur 20 comporte un corps, par exemple en une matière moulée, constitué d'une partie médiane 21, prolongée d'un côté par une base 22 et de l'autre par deux branches 23 et 24. Le détecteur multiple 20 peut être fixé sur une face extérieure du boîtier 1 par des pièces 25 et 26 enserrant sa base 22 et la partie médiane 21 dudit détecteur traverse alors le cadre secondaire 4, à travers le moyeu 11, les branches 23 et 24 passant entre ledit cadre secondaire 4 et la toupie 2. Lorsque le détecteur multiple 20 est ainsi rendu solidaire du boîtier 1, les faces d'extrémité respectives 27, 28 et 29, dirigées vers la toupie, de la partie médiane 21 et des branches 23 et 24 occupent respectivement les positions 14.I, 14.III et 14.IV définies ci-dessus. De préférence, les faces 27, 28 et 29 sont équidistantes de la surface de la toupie 2.

A l'intérieur de la base 22 sont logés trois dispositifs photoémetteurs 31,32,33, par exemple du type diode, et trois dispositifs photorécepteurs 34,35,36, par exemple du type transistor. Les dispositifs photoémetteurs 31,32,33 et photorécepteurs 34,35,36 sont reliés à des broches de connexion électrique 37.

La lumière émise par les dispositifs photoémetteurs 31,32,33 est conduite par des fibres optiques respectives 38,39,40 jusqu'aux faces d'extrémité 27,28,29 du détecteur 20, en regard de la partie sphérique de la toupie 2. Sur cette partie sphérique, la lumière émise par les dispositifs photoémetteurs 31,32,33 forme des taches lumineuses, pratiquement ponctuelles, dont le diamètre est par exemple inférieur à 80 $\mu$m, de préférence de l'ordre de 35 $\mu$m. Les taches lumineuses sont respectivement observées par l'extrémité d'autres fibres optiques 41,42,43, internes au détecteur 20 et débouchant dans les faces 27,28,29, qui conduisent la lumière jusqu'aux dispositifs photorécepteurs respectifs 34,35,36.

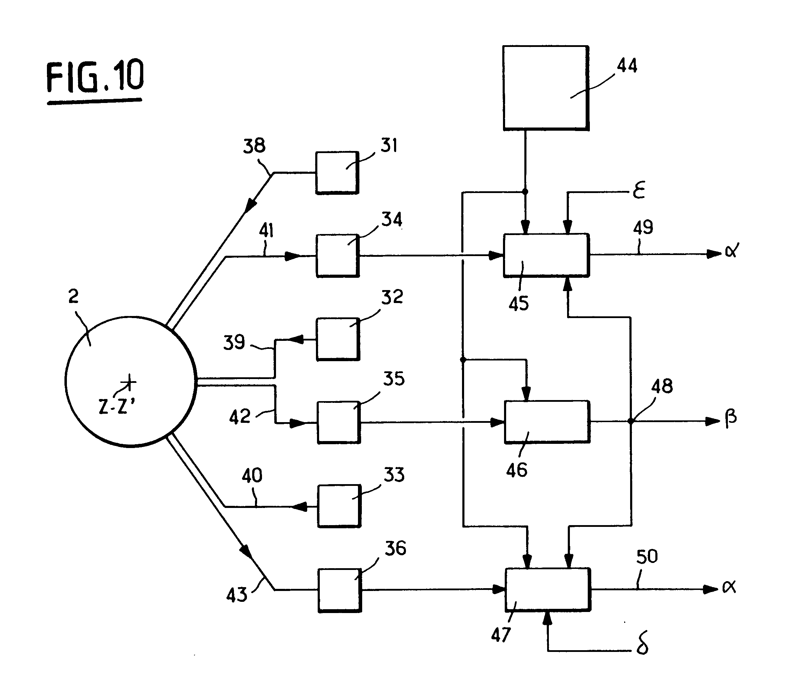

Sur le schéma synoptique du système gyroscopique conforme à la présente invention, montré par la figure 10, on a représenté la toupie 2, les dispositifs photoémetteurs 31, 32 et 33, les dispositifs photorécepteurs 34, 35 et 36 et les fibres optiques 38 à 43.

De ce qui a été expliqué ci-dessus, on comprendra que :
- le signal électrique apparaissant à la sortie du dispositif photorécepteur 35 est une mesure des longueurs L1,L1′,L1″,..., L2,L2′,L2″,... représentative de l'angle $\beta$ ;
- le signal électrique apparaissant à la sortie du dispositif photorécepteur 34 est une mesure des longueurs L1,L1′,L1″,..., L2,L2′,L2″,... représentative de la quantité A = $\alpha.\cos\beta.\cos\epsilon$ ; et

- le signal électrique apparaissant à la sortie du dispositif photorécepteur 36 est une mesure des longueurs L1,L1′,L1″,..., L2,L2′,L2″,... représentative de la quantité B = $\alpha.\cos\beta.\cos\delta$.

Le système de la figure 10 comporte une table 44 dans laquelle sont stockées, avec leur signe, des valeurs angulaires correspondant aux différents couples de valeurs L1,L2, L1′,L2′, L1″,L2″, etc ... Cette table 44 est reliée à différents moyens de calcul 45, 46 et 47, qui reçoivent respectivement les signaux de sortie des dispositifs photorécepteurs 34, 35 et 36.

Les moyens de calcul 46 peuvent donc fournir à leur sortie 48 une mesure de l'angle $\beta$.

La sortie 48 des moyens de calcul 46 est de plus reliée aux moyens de calcul 45 et 47, à qui de plus on a fourni respectivement les valeurs des angles fixes $\epsilon$ et $\delta$.

La sortie 49 des moyens de calcul 45 peut donc délivrer une valeur A/$\cos\beta.\cos\epsilon$, qui est une mesure de l'angle $\alpha$. De même, la sortie 50 des moyens de calcul 47 peut donc délivrer une valeur B/$\cos\beta.\cos\delta$, qui est une autre mesure de l'angle $\alpha$.

**Revendications**

1. Système gyroscopique comprenant :
   - une toupie (2) ayant un centre (O) et susceptible d'être entraînée en rotation autour d'un premier axe (Z-Z′) passant par ledit centre ;
   - un cadre primaire (3) sur lequel ladite toupie est montée de façon à pouvoir tourner autour dudit premier axe ;
   - un cadre secondaire (4) sur lequel ledit cadre primaire est monté de façon à pouvoir tourner autour d'un deuxième axe (Y-Y′), passant par ledit centre de la toupie et perpendiculaire audit premier axe ;
   - un boîtier (1), à l'intérieur duquel sont logés ladite toupie et lesdits cadres primaire et secondaire et sur lequel ledit cadre secondaire est monté de façon à pouvoir tourner autour d'un troisième axe (X-X′), passant par ledit centre de la toupie et perpendiculaire audit deuxième axe, ladite toupie étant telle que, au moins au voisinage du plan défini par lesdits deuxième et troisième axes, sa surface extérieure présente la forme d'une sphère centrée sur ledit centre et porte un ensemble de zones alternativement contrastées (13,17), tandis que ledit cadre secondaire est monté rotatif sur ledit boîtier par l'intermédiaire de moyeux (11,12), qui définissent ledit troisième axe et dont au moins l'un (11) d'eux est creux ;
   - des premiers moyens d'éclairement (32), solidaires dudit boîtier et émettant un premier faisceau lumineux centré sur ledit troisième axe, pour former, à travers ledit moyeu creux (11), une première tache lumineuse sur ladite surface extérieure sphérique de la toupie ;
   - des premiers moyens photosensibles (35), solidaires dudit boîtier, prévus pour observer, à travers ledit moyeu creux, ladite première tache lumineuse formée par lesdits premiers moyens d'éclairement ;
   - des premiers moyens de calcul (46) pour calculer, à partir des informations fournies par lesdits premiers moyens photosensibles, l'angle de rotation $\beta$ dudit boîtier autour dudit deuxième axe ;
   - des deuxièmes moyens d'éclairement (31), solidaires dudit boîtier et émettant un deuxième faisceau lumineux pour former une deuxième tache lumineuse sur ladite surface extérieure sphérique de la toupie ; et
   - des deuxièmes moyens photosensibles (34), solidaires dudit boîtier, prévus pour observer ladite deuxième tache lumineuse formée par lesdits deuxièmes moyens d'éclairement ;
   caractérisé :
   - en ce que ledit deuxième faisceau lumineux est centré sur un quatrième axe (15) passant par ledit centre et coplanaire auxdits deuxième et troisième axes, ledit quatrième axe formant un angle fixe $\epsilon$ avec ledit deuxième axe ; et
   - en ce que sont prévus des deuxièmes moyens de calcul (45) pour calculer, à partir des informations fournies par lesdits deuxièmes moyens photosensibles, l'angle A = $\alpha \cos \beta \cos \epsilon$ qui mesure la rotation de l'axe de la toupie dans le plan contenant ledit premier axe (Z-Z') et ledit quatrième axe (15), et pour calculer de plus l'angle $\alpha$, $\alpha$ étant l'angle de rotation dudit boîtier autours dudit troisième axe, à partir des angles $\epsilon$ connu par construction, $\beta$ calculé précédemment, et A calculé ci-dessus.

2. Système gyroscopique selon la revendication 1, caractérisé en ce que l'éclairement de ladite surface extérieure sphérique de la toupie (2) par lesdits deuxièmes moyens d'éclairement (31), ainsi que l'observation de ladite deuxième tache lumineuse par lesdits deuxièmes moyens photosensibles (34) s'effectuent à travers ledit moyeu creux (11).

3. Système gyroscopique selon la revendication 2,
caractérisé en ce que lesdits premiers et deuxièmes moyens d'éclairement et lesdits premiers et deuxièmes moyens photosensibles sont regroupés dans un unique détecteur (20) logé au moins en partie dans ledit moyeu creux (11).

4. Système gyroscopique selon la revendication 3,
caractérisé en ce que ledit détecteur unique (20) comporte :
   - un premier élément photoémetteur (32), disposé à l'extérieur dudit moyeu creux (11) et associé à une première fibre optique (39) passant à travers ledit moyeu creux pour former ladite première tache lumineuse ;
   - un premier élément photosensible (35), disposé à l'extérieur dudit moyeu creux et associé à une deuxième fibre optique (42) observant ladite première tache lumineuse et passant à travers ledit moyeu creux ;
   - un deuxième élément photoémetteur (31), disposé à l'extérieur dudit moyeu creux et associé à une troisième fibre optique (38) passant à travers ledit moyeu creux pour former ladite deuxième tache lumineuse ; et
   - un deuxième élément photosensible (34), disposé à l'extérieur dudit moyeu creux et associé à une quatrième fibre optique (41) observant ladite deuxième tache lumineuse et passant à travers ledit moyeu creux.

5. Système gyroscopique selon la revendication 4,
caractérisé en ce que la distance entre ladite surface sphérique de la toupie (2) et les extrémités, en regard de celle-ci, desdites première et deuxième fibres optiques (39,42) est égale à la distance entre ladite surface sphérique de la toupie et les extrémités, en regard de celle-ci, desdites troisième et quatrième fibres optiques (38,41).

6. Système gyroscopique selon l'une des revendications 4 ou 5,
caractérisé en ce que ledit détecteur unique comporte un corps pourvu d'une partie centrale (21) traversée par lesdites première à quatrième fibres optiques et d'une branche latérale traversée par lesdites troisième et quatrième fibres optiques.

7. Système gyroscopique selon l'une des revendications 1 à 6,
caractérisé en ce qu'il comporte de plus :
   - des troisièmes moyens d'éclairement (33), solidaires dudit boîtier et émettant un troisième faisceau lumineux centré sur un cinquième axe (16) passant par ledit centre (0) et coplanaire auxdits deuxième et troisième axes pour former une troisième tache lumineuse sur ladite surface extérieure sphérique de la toupie (2), ledit cinquième axe formant un angle fixe $\delta$ avec ledit deuxième axe ;
   - des troisièmes moyens photosensibles (36), solidaires dudit boîtier, prévus pour observer ladite troisième tache lumineuse formée par lesdits troisièmes moyens d'éclairement ; et
   - des troisièmes moyens de calcul (47) pour calculer, à partir des informations fournies par lesdits troisièmes moyens photosensibles, l'angle B $= \alpha \cos \beta \cos \delta$ qui mesure la rotation de l'axe de la toupie dans le plan contenant ledit axe (Z-Z') et ledit cinquième axe (16), et pour calculer de plus l'angle $\alpha$ à partir des angles $\delta$ connu par construction, $\beta$ calculé précédemment et B calculé ci-dessus.

8. Système gyroscopique selon la revendication 7,
caractérisé en ce que ledit cinquième axe (16) est symétrique dudit quatrième axe par rapport audit troisième axe, de sorte que, en valeur absolue, les angles fixes $\epsilon$ et $\delta$ sont égaux.

9. Système gyroscopique selon l'une des revendications 7 ou 8,
caractérisé en ce que l'éclairement de ladite surface extérieure sphérique de la toupie par lesdits troisièmes moyens d'éclairement (33), ainsi que l'observation de ladite troisième tache lumineuse par lesdits troisièmes moyens photosensibles (36), s'effectuent à travers ledit moyeu creux (11).

10. Système gyroscopique selon les revendications 3 et 9,
caractérisé en ce que lesdits troisièmes moyens d'éclairement (33) et lesdits troisièmes moyens photosensibles (36) sont regroupés dans ledit détecteur unique (20).

**11.** Système gyroscopique selon la revendication 10,
caractérisé en ce que le détecteur unique comporte de plus :
- un troisième élément photoémetteur (33), disposé à l'extérieur dudit moyeu creux et associé à une cinquième fibre optique (40) passant à travers ledit moyeu creux pour former ladite troisième tache lumineuse ; et
- un troisième élément photosensible (36), disposé à l'extérieur dudit moyeu creux et associé à une sixième fibre optique (43) observant ladite troisième tache lumineuse et passant à travers ledit moyeu creux.

**12.** Système gyroscopique selon les revendications 5 et 11,
caractérisé en ce que les extrémités desdites cinquième et sixième fibres optiques, en regard de la surface sphérique de la toupie, sont à la même distance que les extrémités correspondantes desdites première à quatrième fibres optiques.

**13.** Système gyroscopique selon les revendications 6 et 11,
caractérisé en ce que le corps du détecteur unique comporte une autre branche latérale traversée par lesdites cinquième et sixième fibres optiques, qui traversent également ladite partie centrale du détecteur.

**14.** Système gyroscopique selon la revendication 13, caractérisé en ce que les deux branches latérales du détecteur sont symétriques par rapport audit troisième axe.

**Claims**

**1.** Gyroscopic system comprising:
- a spinner (2) having a centre (O) and capable of being driven in rotation about a first axis (Z-Z') passing through the said centre;
- a primary frame (3) on which the said spinner is mounted in such a way as to be able to turn about the said first axis;
- a secondary frame (4) on which the said primary frame is mounted in such a way as to be able to turn about a second axis (Y-Y'), passing through the said centre of the spinner and perpendicular to the said first axis;
- a casing (1), within which the said spinner and the said primary and secondary frames are housed, and on which the said secondary frame is mounted in such a way as to be able to turn about a third axis (X-X'), passing through the said centre of the spinner and perpendicular to the said second axis, the said spinner being such that, at least in the vicinity of the plane defined by the said second and third axes, its outer surface exhibits the shape of a sphere centred on the said centre and carries a set of alternately contrasted regions (13, 17), while the said secondary frame is mounted rotatably on the said casing by means of hubs (11, 12), which define the said third axis and at least one (11) of which is hollow;
- first illumination means (32), secured to the said casing and emitting a first light beam centred on the said third axis, in order to form a first light spot, through the said hollow hub (11), on the said spherical outer surface of the spinner;
- first photosensitive means (35), secured to the said casing, provided so as to observe the said first light spot formed by the said first illumination means, through the said hollow hub;
- first calculating means (46) for calculating, from information supplied by the said first photosensitive means, the angle of rotation $\beta$ of the said casing about the said second axis;
- second illumination means (31) secured to the said casing and emitting a second light beam in order to form a second light spot on the said spherical outer surface of the spinner; and
- second photosensitive means (34), secured to the said casing, provided to observe the said second light spot formed by the said second illumination means;
characterized:
- in that the said second light beam is centred on a fourth axis (15) passing through the said centre and coplanar with the said second and third axes, the said fourth axis forming a fixed angle $\epsilon$ with the said second axis; and
- in that second calculating means (45) are provided to calculate, from information supplied by the said second photosensitive means, the angle A = $\alpha$ cos $\beta$ cos $\epsilon$ which measures the rotation of the axis of the spinner in the plane containing the said first axis (Z-Z') and the said fourth axis (15), and to calculate moreover the angle $\alpha$, $\alpha$ being the angle of rotation of the said casing about the said third axis, from the angles ε, known by construction, β, calculated previously, and A calculated above.

2. Gyroscopic system according to Claim 1, characterized in that the illumination of the said spherical outer surface of the spinner (2) by the said second illumination means (31), as well as the observation of the said second light spot by the said second photosensitive means (34), takes place through the said hollow hub (11).

3. Gyroscopic system according to Claim 2, characterized in that the said first and second illumination means and the said first and second photosensitive means are grouped together in a single detector (20) housed at least partly in the said hollow hub (11).

4. Gyroscopic system according to Claim 3, characterized in that the said single detector (20) includes:
   - a first photoemitter element (32), arranged outside the said hollow hub (11) and associated with a first optical fibre (39) passing through the said hollow hub to form the said first light spot;
   - a first photosensitive element (35), arranged outside the said hollow hub and associated with a second optical fibre (42) observing the said first light spot and passing through the said hollow hub;
   - a second photoemitter element (31), arranged outside the said hollow hub and associated with a third optical fibre (38) passing through the said hollow hub to form the said second light spot; and
   - a second photosensitive element (34), arranged outside the said hollow hub and associated with a fourth optical fibre (41) observing the said second light spot and passing through the said hollow hub.

5. Gyroscopic system according to Claim 4, characterized in that the distance between the said spherical surface of the spinner (2) and the ends, opposite the latter, of the said first and second optical fibres (39, 42) is equal to the distance between the said spherical surface of the spinner and the ends, opposite the latter, of the said third and fourth optical fibres (38, 41).

6. Gyroscopic system according to one of Claims 4 or 5, characterized in that the said single detector includes a body provided with a central part (21) traversed by the said first to fourth optical fibres and with a side branch traversed by the said third and fourth optical fibres.

7. Gyroscopic system according to one of Claims 1 to 6, characterized in that it moreover includes:
   - third illumination means (33), secured to the said casing and emitting a third light beam centred on a fifth axis (16) passing through the said centre (0) and coplanar with the said second and third axes to form a third light spot on the said spherical outer surface of the spinner (2), the said fifth axis forming a fixed angle δ with the said second axis;
   - third photosensitive means (36), secured to the said casing, provided to observe the said third light spot formed by the said third illumination means; and
   - third calculating means (47) for calculating, from information supplied by the said third photosensitive means, the angle B = α cos β cos δ which measures the rotation of the axis of the spinner in the plane containing the said axis (Z-Z') and the said fifth axis (16), and for calculating moreover the angle α from the angles δ, known by construction, β, calculated previously, and B calculated above.

8. Gyroscopic system according to Claim 7, characterized in that the said fifth axis (16) is symmetric with the said fourth axis with respect to the said third axis, so that, in absolute value, the fixed angles ε and δ are equal.

9. Gyroscopic system according to one of Claims 7 or 8, characterized in that the illumination of the said spherical outer surface of the spinner by the said third illumination means (33), as well as the observation of the said third light spot by the said third photosensitive means (36), takes place through the said hollow hub (11).

10. Gyroscopic system according to Claims 3 and 9, characterized in that the said third illumination means (33) and the said third photosensitive means (36) are grouped together in the said single detector (20).

11. Gyroscopic system according to Claim 10, characterized in that the single detector moreover includes:

- a third photoemitter element (33), arranged outside the said hollow hub and associated with a fifth optical fibre (40) passing through the said hollow hub to form the said third light spot; and
- a third photosensitive element (36), arranged outside the said hollow hub and associated with a sixth optical fibre (43) observing the said third light spot and passing through the said hollow hub.

12. Gyroscopic system according to Claims 5 and 11, characterized in that the ends of the said fifth and sixth optical fibres, opposite the spherical surface of the spinner, are at the same distance as the corresponding ends of the said first to fourth optical fibres.

13. Gyroscopic system according to Claims 6 and 11, characterized in that the body of the single detector includes another side branch traversed by the said fifth and sixth optical fibres, which also pass through the said central part of the detector.

14. Gyroscopic system according to Claim 13, characterized in that the two side branches of the detector are symmetric with respect to the said third axis.

**Patentansprüche**

1. Kreiselsystem mit:
   - einem Kreisel (2) mit einem Mittelpunkt (O), der um eine erste durch den Mittelpunkt verlaufende Achse (Z-Z') in Drehung versetzt werden kann;
   - einem Hauptrahmen (3), an dem der Kreisel so angebracht ist, daß er sich um die erste Achse drehen kann;
   - einem Nebenrahmen (4), an dem der Hauptrahmen so angebracht ist, daß er sich um eine zweite Achse (Y-Y'), die durch den Mittelpunkt des Kreisels senkrecht zur ersten Achse verläuft, drehen kann;
   - einem Gehäuse (1), in dem der Kreisel und der Haupt- und Nebenrahmen gelagert sind, und an dem der Nebenrahmen so angebracht ist, daß er sich um eine dritte Achse (X-X'), die durch den Mittelpunkt des Kreisels senkrecht zur zweiten Achse verläuft, drehen kann, wobei der Kreisel derart ist, daß mindestens in der Nähe der von der zweiten und dritten Achse bestimmten Ebene seine Außenfläche die Form einer um den Mittelpunkt herum angeordneten Kugel hat und einen Komplex von Zonen mit wechselndem Kontrast (13,17) hat, während der Nebenrahmen drehbar am Gehäuse über Naben (11,12) angebracht ist, die die dritte Achse bilden und von denen mindestens eine (11) hohl ist;
- ersten Beleuchtungsmitteln (32), die mit dem Gehäuse verbunden sind und ein erstes auf die dritte Achse gerichtetes Lichtbündel abgeben, um durch die Hohlnabe (11) hindurch auf der kugelförmigen Außenfläche des Kreisels einen ersten Lichtfleck zu bilden;
- ersten mit dem Gehäuse verbundenen lichtempfindlichen Mitteln (35), um durch die Hohlnabe den ersten von den ersten Beleuchtungsmitteln gebildeten Lichtfleck zu beobachten;
- ersten Rechenmitteln (46), um aus Informationen der ersten lichtempfindlichen Mittel den Drehwinkel $\beta$ des Gehäuses um die zweite Achse berechnen zu können;
- zweiten, mit dem Gehäuse verbundenen Beleuchtungsmitteln (31), die ein zweites Lichtbündel abgeben, um auf der kugelförmigen Außenfläche des Kreisels einen zweiten Lichtfleck zu bilden; und
- zweiten mit dem Gehäuse verbundenen lichtempfindlichen Mitteln (34), um den zweiten von den zweiten Beleuchtungsmitteln gebildeten Lichtfleck beobachten zu können;
gekennzeichnet;
- dadurch, daß das zweite Lichtbündel auf eine vierte Achse (15) gerichtet ist, die durch den Mittelpunkt koplanar mit der zweiten und dritten Achse verläuft, wobei die vierte Achse mit der zweiten Achse einen feststehenden Winkel $\epsilon$ bildet; und
- dadurch, daß zweite Rechenmittel (45) vorgesehen sind, um aus den Informationen der zweiten lichtempfindlichen Mittel den Winkel $A = \alpha \cos\beta.\cos\epsilon$ zu berechnen, mit dem die Drehung der Achse des Kreisels in der Ebene mit der ersten Achse (Z-Z') und der vierten Achse (15) gemessen wird, und um außerdem aus dem konstruktiv bekannten Winkel $\epsilon$, dem vorstehend berechneten Winkel $\beta$ und dem oben berechneten Winkel $A$ den Winkel $\alpha$ zu berechnen, der der Winkel für die Drehung des Gehäuses um die dritte Achse ist.

2. Kreiselsystem nach Anspruch 1, dadurch gekennzeichnet, daß die Beleuchtung der kugelförmigen Außenfläche von Kreisel (2) durch die zweiten Beleuchtungsmittel (31) sowie die Beobachtung des zweiten Lichtflecks durch die zweiten lichtempfindlichen Mittel (34) durch die Hohlnabe (11) hindurch erfolgen.

3. Kreiselsystem nach Anspruch 2,
dadurch gekennzeichnet, daß die ersten und zweiten Beleuchtungsmittel und die ersten und zweiten lichtempfindlichen Mittel in einem einzigen Detektor (20) zusammengefaßt sind, der sich mindestens zum Teil in der Hohlnabe (11) befindet.

4. Kreiselsystem nach Anspruch 3,
dadurch gekennzeichnet, daß der einzige Detektor (20) umfaßt:
   - ein erstes lichtemittierendes Element (32), das außerhalb der Hohlnabe (11) angeordnet und mit einem ersten durch die Hohlnabe verlaufenden Lichtwellenleiter (39) zur Bildung des ersten Lichtflecks verbunden ist;
   - ein erstes lichtempfindliches Element (35), das außerhalb der Hohlnabe angeordnet und mit einem zweiten Lichtwellenleiter (42) innerhalb der Hohlnabe zur Beobachtung des ersten Lichtflecks verbunden ist;
   - ein zweites lichtemittierendes Element (31), das außerhalb der Hohlnabe angeordnet und mit einem dritten Lichtwellenleiter (38) innerhalb der Hohlnabe zur Bildung des zweiten Lichtflecks verbunden ist; und
   - ein zweites lichtempfindliches Element (34), das außerhalb der Hohlnabe angeordnet und mit einem vierten Lichtwellenleiter (41) innerhalb der Hohlnabe zur Beobachtung des zweiten Lichtflecks verbunden ist.

5. Kreiselsystem nach Anspruch 4,
dadurch gekennzeichnet, daß der Abstand zwischen der kugelförmigen Fläche von Kreisel (2) und den derselben gegenüberliegenden Enden des ersten und zweiten Lichtwellenleiters (39,42) gleich dem Abstand Zwischen der kugelförmigen Fläche des Kreisels und den derselben gegenüberliegenden Enden des dritten und vierten Lichtwellenleiters (38,41) ist.

6. Kreiselsystem nach einem der Ansprüche 4 oder 5,
dadurch gekennzeichnet, daß der einzige Detektor einen Körper mit einem mittleren Teil (21), durch den der erste bis vierte Lichtwellenleiter verlaufen, und einen Seitenarm hat, durch den der dritte und vierte Lichtwellenleiter verlaufen.

7. Kreiselsystem nach einem der Ansprüche 1 bis 6,
dadurch gekennzeichnet, daß es außerdem umfaßt:
   - dritte, mit dem Gehäuse verbundene Beleuchtungsmittel (33), die zur Bildung eines dritten Lichtflecks auf der kugelförmigen Außenfläche von Kreisel (2) ein drittes Lichtbündel abgeben, das auf eine fünfte Achse (16) gerichtet, die durch den Mittelpunkt (O) koplanar mit der zweiten und dritten Achse verläuft, wobei die fünfte Achse mit der zweiten Achse einen feststehenden Winkel $\delta$ bildet;
   - dritte, mit dem Gehäuse verbundene lichtempfindliche Mittel (36) zur Beobachtung des von den dritten Beleuchtungsmitteln gebildeten dritten Lichtflecks; und
   - dritte Rechenmittel (47), um aus den Informationen der dritten lichtempfindlichen Mittel den Winkel $B = \alpha \cos\beta.\cos\delta$ berechnen zu können, mit dem die Drehung der Achse des Kreisels in der Ebene mit Achse (Z-Z') und der fünften Achse (16) gemessen wird, und um außerdem aus dem konstruktiv bekannten Winkel $\delta$, dem vorstehend berechneten Winkel $\beta$ und dem oben berechneten Winkel B den Winkel $\alpha$ berechnen zu können.

8. Kreiselsystem nach Anspruch 7,
dadurch gekennzeichnet, daß die fünfte Achse (16) mit der vierten Achse gegenüber der dritten Achse symmetrisch ist, so daß die absoluten Werte der feststehenden Winkel $\epsilon$ und $\delta$ gleich sind.

9. Kreiselsystem nach einem der Ansprüche 7 oder 8,
dadurch gekennzeichnet, daß die Beleuchtung der kugelförmigen Außenfläche des Kreisels durch die dritten Beleuchtungsmittel (33) sowie die Beobachtung des dritten Lichtflecks durch die dritten lichtempfindlichen Mittel (36) durch die Hohlnabe (11) erfolgen.

10. Kreiselsystem nach den Ansprüchen 3 und 9,
dadurch gekennzeichnet, daß die dritten Beleuchtungsmittel (33) und die dritten lichtempfindlichen Mittel (36) im einzigen Detektor (20) zusammengefaßt sind.

11. Kreiselsystem nach Anspruch 10,
dadurch gekennzeichnet, daß der einzige Detektor außerdem umfaßt:

- ein drittes lichtemittierendes Element (33), das außerhalb der Hohlnabe angeordnet und zur Bildung des dritten Lichtflecks mit einem fünften Lichtwellenleiter (40), der durch die Hohlnabe verläuft, verbunden ist; und

- ein drittes lichtempfindliches Element (36), das außerhalb der Hohlnabe angeordnet und zur Beobachtung des dritten Lichtflecks mit einem sechsten Lichtwellenleiter (43), der durch die Hohlnabe verläuft, verbunden ist.

12. Kreiselsystem nach den Ansprüchen 5 und 11, dadurch gekennzeichnet, daß die der kugelförmigen Fläche des Kreisels gegenüberliegenden Enden des fünften und sechsten Lichtwellenleiters den gleichen Abstand haben wie die entsprechenden Enden des ersten bis vierten Lichtwellenleiters.

13. Kreiselsystem nach den Ansprüchen 6 und 11, dadurch gekennzeichnet, daß der Körper des einzigen Detektors einen weiteren Seitenarm zur Aufnahme des fünften und sechsten Lichtwellenleiters hat, die ebenfalls durch den mittleren Teil des Detektors verlaufen.

14. Kreiselsystem nach Anspruch 13, dadurch gekennzeichnet, daß die beiden Seitenarme des Detektors gegenüber der dritten Achse symmetrisch angeordnet sind.

# FIG.1

EP 0 521 757 B1

# FIG. 2

EP 0 521 757 B1

# FIG. 3

# FIG. 4

FIG.8

38  23  41

FIG.7

38  41
39  42
40  43
21  22

FIG.6

28
38  41
20
39  22
27  42
40  43
29

FIG.5

VIII
23  28
20  2
22  34
31  38,41  VII
37
32  35  39,42  27
33  40,43  21
36  VII
IX
24  29
IX

FIG.9

24  40
29
43

EP 0 521 757 B1

16

FIG.10

EP 0 521 757 B1